(19) Europäisches Patentamt
European Patent Office
Office européen des brevets

(11) Veröffentlichungsnummer: **0 300 086 B1**

(12) # EUROPÄISCHE PATENTSCHRIFT

(45) Veröffentlichungstag der Patentschrift: **02.05.91**

(51) Int. Cl.⁵: **B65G 69/18**

(21) Anmeldenummer: **87115221.1**

(22) Anmeldetag: **17.10.87**

(54) **Schutzvorrichtung für Be- und/oder Entladeeinrichtungen.**

(30) Priorität: **18.10.86 DE 3635543**

(43) Veröffentlichungstag der Anmeldung:
**25.01.89 Patentblatt 89/04**

(45) Bekanntmachung des Hinweises auf die
Patenterteilung:
**02.05.91 Patentblatt 91/18**

(84) Benannte Vertragsstaaten:
**AT BE CH DE ES FR GB GR IT LI LU NL SE**

(56) Entgegenhaltungen:
**DE-A- 1 756 524**
**DE-A- 3 441 411**

(73) Patentinhaber: **O & K ORENSTEIN & KOPPEL AG**
**Brunsbütteler Damm 144-208**
**W-1000 Berlin 20(DE)**

(72) Erfinder: **Steckel, Horst, Dipl.-Ing.**
**Rosenstrasse 5**
**W-6670 St. Ingbert(DE)**

EP 0 300 086 B1

## Beschreibung

Die Erfindung betrifft eine Kaibandbrücke, in die eine mit der Schiffsbe- und/oder -entladeeinrichtung zusammenwirkende Be- und/oder Entladebrücke hineinragt, wobei die Be- und/oder Entladebrücke in Längsrichtung der Kaibandbrücke verfahrbar ist und wobei der der Be- und/oder Entladebrücke zugewandte, in Längsrichtung verlaufende Schlitz in der Kaibandbrücke mit einer im Öffnungssinne betätigbaren Schutzeinrichtung geschlossen ist.

Eine Kaibandbrücke dieser Art ist bekannt.

Schiffsbe- und/oder -entlader bestehen vielfach aus einem auf einem Kai in Längsrichtung desselben verfahrbaren Gerät, welches auf der Wasserseite mit einer Be- und/oder Entladeeinrichtung versehen ist. Diese kann z.B. rüsselförmig ausgebildet sein, wobei die das Ein- bzw. Ausstapeln durchführenden Bauteile unterschiedlichster Art sein können. Innerhalb des Rüssels können sowohl Wendelrutschen, Becherwerke, pneumatische Zu- und Abfördereinrichtungen oder dgl. angeordnet sein. Um das ein- und auszustapelnde Gut vor Witterungseinflüssen zu schützen, sind die Be- und/oder Entladeeinrichtungen verkleidet. Diese Verkleidung besteht in der Regel aus segmentförmigen metallischen Komponenten. Es ist leicht erkennbar, daß durch diese Art der Verkleidung die Be- und/oder Entladeeinrichtung einerseits relativ schwer und kompakt wird und auf der anderen Seite der Zugang zu den eigentlichen Austragsorganen, z.B. für notwendige Reparaturen, nur unter hohem Zeit- und Kostenaufwand möglich ist.

Auf dem Kai selber verläuft vielfach eine sogenannte Kaibandbrücke, die mit mindestens einem entlang des Kais verlaufenden Förderband versehen ist, welches für das Zu- und/oder Abfördern des Gutes zum und vom Schiffsbe- und/oder -entlader dient. Damit beim Verfahren des Gerätes entlang des Kais nicht eine Vielzahl von Förderbändern in unterschiedlichen Längen notwendig ist, ist der Schiffsbe- und/oder -entlader mit einer sogenannten Be- und/oder Entladebrücke versehen, die sich zwischen dem Gerät selber und dem Förderband erstreckt, wobei sie in einen längs der Kaibandbrücke verlaufenden Schlitz eintaucht. Je nach Art des zu- oder abzuführenden Gutes besteht die Gefahr, daß das Gut durch Witterungseinflüsse (Wind, Regen, Schnee, Spritzwasser oder dgl.) für seine spätere Verwendung beeinträchtigt wird. Um dies zu vermeiden, wurden bisher entweder eine Vielzahl von Klappen mit definierten Abmessungen verwendet, die aus Rohrrahmen, Verstrebungen, Trapezverkleidungen sowie Scharnieren bestehen, oder aber es wurden Gummilappen definierter Abmessungen eingesetzt. Diese bestehen aus zwei zusammengeklebten Fördergurten, die in ihrem unteren Bereich untereinander mit einem Seil bzw. einer Kette verbunden und in ihrem oberen Bereich verschraubt sind. Zum Verfahren des Gerätes bzw. der damit verbundenen Be- und/oder Entladebrücke in Kailängsrichtung ist ein aufwendiges Anhebegrüst notwendig, welches die einzelnen Klappen bzw. Gummilappensegmente über die in die Kaibandbrücke eintauchende Be- und/oder Entladebrücke hinweghebt. Nachteilig ist hier zu sehen, daß beim Anheben der Segmente Schlitze gebildet werden, so daß nicht ausgeschlossen werden kann, daß das Gut in diesem Bereich doch noch durch Witterungseinflüsse beschädigt wird. Darüber hinaus sind eine Vielzahl von Segmenten notwendig, die einerseits relativ kosten- und montageaufwendig sind und zum anderen durch die Brücke (bei Verfahren) leicht beschädigt werden können.

Der Erfindung liegt ausgehend vom allgemeinen St.d.T. die Aufgabe zugrunde, eine Kaibandbrücke gemäß dem gattungsbildenden Teil des Hauptpatentanspruches dahingehend weiterzuentwickeln, daß einerseits eine leichte Handhabung und andererseits eine optimale Abdichtung bei gleichzeitiger leichter Zugänglichkeit der abgedichteten Bauteile gewährleistet ist. Darüber hinaus soll die Schutzeinrichtung im Gegensatz zum St.d.T. wesentliche preiswerter herstell- und montierbar sein.

Diese Aufgabe wird erfindungsgemäß dadurch gelöst, daß

- die Schutzeinrichtung durch eine einstückige Plane aus witterungsbestendigem und schwer entflammbarem Material gebildet ist, die in ihrem unteren Bereich eine Materialverdikkung aufweist und auf der gesamten Länge der Kaibandbrücke ober- und unterhalb des Schlitzes fest gelagert ist,
- die Plane durch mehrere Halterollenpaare geführt ist, die jeweils paarweise im Bereich des Schlitzes ober- und unterhalb der Be- und/oder Entladebrücke befestigt sind, und
- die Plane im Bereich ihres unteren Endes um den sich ergebenden Öffnungsquerschnitt der Be- und/oder Entladebrücke verlängert ist, wobei der mit der Materialverdickung versehene Planenbereich, auf dem die Halterollenpaare laufen, strammgezogen ist.

Die Erfindung soll als Schutzeinrichtung für Kaibandbrücken eingesetzt werden, wobei die mit dem Gerät zusammenwirkende Be- und/oder Entladebrücke in die Kaibandbrücke hineinragt. Die beim Verfahren des Gerätes bzw. der Brücke sich ständig verlagernde Öffnung wird durch die erfindungsgemäße Plane dergestalt verschlossen bzw. abgedichtet, daß die Plane einstückig ausgebildet und auf der gesamten Länge der Kaibandbrücke ober- und unterhalb des Schlitzes verlagert ist, wobei die Plane lediglich im Bereich der Be- und/oder Entladebrücke durch mehrere, jeweils paarweise im oberen und unteren Bereich des Schlitzes angeordnete Halterollenpaare geführt ist. Im Gegensatz zum St.d.T., bei dem lediglich segmentförmige Abdeckungen verwendet werden, ist hier keine gleitende, sonder eine rollende Reibung beim Verfahren des Gerätes bzw. der Brücke gegeben, die sich wesentlich besser auf das Verschleißverhalten der Schutzeinrichtung auswirkt. Infolge des geringen Gewichtes der Plane besteht hier auch die Möglichkeit, den Kaibandbrückenrahmen geringer zu dimensionieren, was letztendlich eine weitere Kostensenkung herbeiführt. Die Plane ist - um Zwangskräften entgegenzuwirken - im Bereich ihres unteren Endes um den sich ergebenden Öffnungsquerschnitt der Be- und/oder Entladebrücke verlängert, wobei der mit der Verdickung versehene untere Planenbereich, auf dem die Halterollenpaare laufen, stramm gezogen ist. Durch diese Maßnahme wird eine absolute Abdichtung der Kaibandbrücke in allen Bereichen herbeigeführt, die auch beim Verfahren des Gerätes bzw. der damit verbundenen Brücke nicht nachläßt. Das zu- bzw. abzufördernde Gut kann somit ohne nachteilige Witterungseinflüsse transportiert werden.

Die im unteren Planenbereich, in Längsrichtung der Kaibandbrücke gesehen, außerhalb der Halterollenpaare in vorgegebenen Abständen angeordneten Sturmhaken werden bei bestimmten Windverhältnissen in einen Anschlag gezogen, um die gesamte Anlage vor Beschädigungen zu schützen. Ferner wird vorgeschlagen, daß die Plane zumindest an einem ihrer Enden an der Kaibandbrücke durch Federn gehalten ist. Durch diese Maßnahme wird die Flexibilität der Schutzeinrichtung unter Vermeidung von Zwangskräften erhöht.

Als Material soll bevorzugt ein mit einem PVC beschichtetes Treviragewebe verwendet werden. Diese Plane bietet sich zum leichten Öffnen und Verschließen sämtlicher Öffnungen an Be- und/oder Entladegeräten an. Folgende Vorteile werden gegenüber dem St.d.T. erreicht:

- preiswerte Herstellung
- schnelle und leichte Montage
- geringes Gewicht
- absolute Dichtheit und kein Verhaken, wie bei den Klappen bzw. Gummisegmenten
- schnelle Zugänglichkeit der Bauteile

Die Erfindung ist in der Zeichnung dargestellt und wird im folgenden näher beschrieben. Es zeigen:

Figur 1 - Prinzipskizze einer Kaibandbrücke mit hineinragender Beladebrücke sowie angedeuteter Schutzeinrichtung

Figuren 2 und 3 - Verschiedene Ansichten der erfindungsgemäßen Schutzeinrichtung als Prinzipskizze

Figur 4 - Vergrößerte Darstellung eines Halterollenpaares gemäß den Figuren 2 und 3.

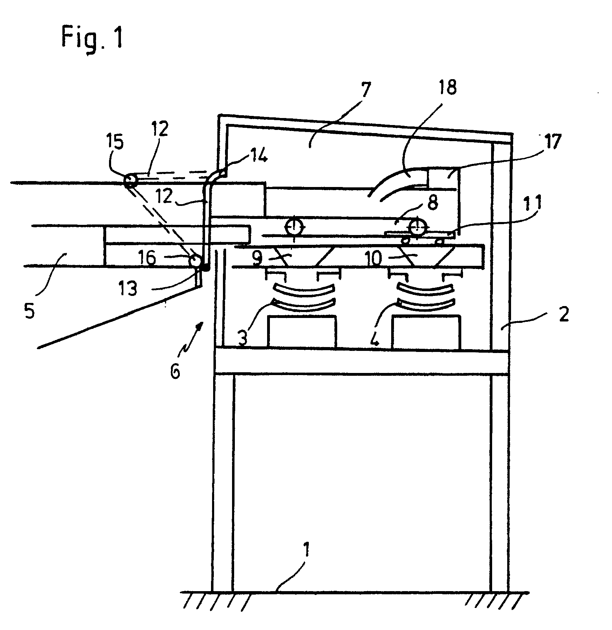

Figur 1 zeigt als Prinzipskizze eine in Längsrichtung eines Kais 1 verlaufende Kaibandbrücke 2, die mit zwei Förderbändern 3,4 versehen ist. Lediglich angedeutet ist die Entladebrücke 5, die durch die Öffnung 6 in den Innenraum 7 der Kaibandbrücke 2 hineinragt. Die Entladebrücke 5 ist mit einem nicht weiter dargestellten Schiffsentlader verbunden und mit diesem in Längsrichtung der Kaibandbrücke 2 verfahrbar. Die Entladebrücke 5 ist ebenfalls mit dem Förderband 8 versehen, welches das von dem Schiffsentlader abgegebene Material über Trichter 9,10 auf das Kaiband 3 oder 4 aufgibt. Zu dem Zweck ist der Abgabekopf 11 verfahrbar. Zum Abdichten der Öffnung 6 dient eine sich über die gesamte Länge der Kaibandbrücke 2 erstreckende Plane 12, die in ihrem unteren Ende eine Verdickung 13 aufweist. Die Plane 12 besteht aus einem witterungsbeständigen PVC-beschichteten Treviragewebe. Die Plane 12 ist oberhalb und unterhalb der Öffnung 6 fest verlagert 14, wobei sie lediglich im Bereich der Entladebrücke 5 durch mehrere paarweise angeordnete Halterollenpaare 15,16 geführt ist.

Die Kaibandbrücke 2 kann natürlich ebenfalls Material zuführen und es auf das Förderband 8 der nunmehr als Beladebrücke fungierenden Einrichtung aufgeben. Zu dem Zweck ist eine Zuführeinrichtung 17 mit einer Abgabeeinrichtung 18 oberhalb des Förderbandes 8 vorgesehen.

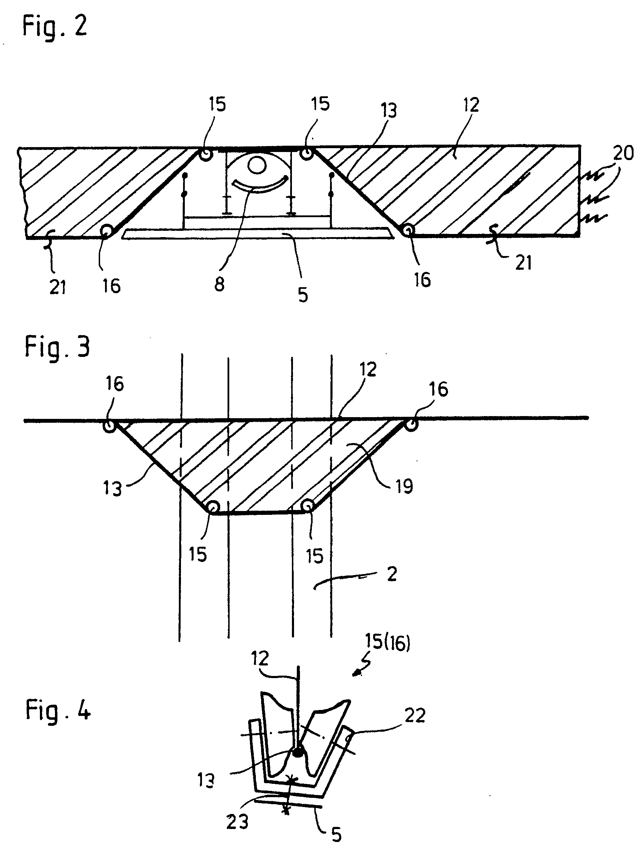

Die Figuren 2 und 3 zeigen verschiedene Ansichten der erfindungsgemäßen Schutzeinrichtung in Form einer Plane 12. Erkennbar sind die Halterollenpaare 15,16 sowie die Ent- oder Beladebrücke 5 (Figur 2) mit dem Zu- oder Abförderband 8. Die Plane 12 ist in ihrem unteren Ende um den sich ergebenden Öffnungsquerschnitt 19 der Be- oder Entladebrücke 5 verlängert, um, ohne Zwangskräften beim Verfahren ausgesetzt zu sein, über den Brückenbereich 19 gehoben werden zu können. Die Plane 12 ist zumindest einseitig mittels Federn 20 an der Kaibandbrücke 2 befestigt und wird außerhalb der unteren Halterollenpaare 16 mittels Sturmhaken 21 an der Kaibandbrücke 2 verankert.

Figur 4 zeigt in vergrößerter Darstellung ein Halterollenpaar 15 oder 16, welches in einer Halterung 22 gelagert und gegenüber der Be- oder Entladebrücke 5 mittels Verbindungselementen 23 arretiert ist. Deutlich erkennbar ist die Plane 12 mit der Verdickung 13, die zwischen dem Halterollenpaar 15 oder 16 geführt wird.

**Ansprüche**

1. Kaibandbrücke, in die eine mit der Schiffsbe- und/oder -entladeeinrichtung zusammenwirkende Be- und/oder Entladebrücke (5) hineinragt, wobei die Be- und/oder Entladebrücke in Längsrichtung der Kaibandbrücke verfahrbar ist und wobei der Be- und/oder Entladebrücke (5) zugewandte, in Längsrichtung verlaufende Schlitz in der Kaibandbrücke (2) mit einer im Öffnungssinne betätigbaren Schutzeinrichtung geschlossen ist, dadurch gekennzeichnet, daß
   - die Schutzeinrichtung durch eine einstückige Plane (12) aus witterungsbestendigem und schwer entflammbarem Material gebildet ist, die in ihrem unteren Bereich eine Materialverdickung (13) aufweist und auf der gesamten Länge der Kaibandbrücke (2) ober- und unterhalb des Schlitzes (6) fest gelagert ist,
   - die Plane (12) durch mehrere Halterollenpaare (15,16) geführt ist, die jeweils paarweise im Bereich des Schlitzes (6) ober- und unterhalb der Be- und/oder Entladebrücke (5) befestigt sind, und
   - die Plane (12) im Bereich ihres unteren Endes um den sich ergebenden Öffnungsquerschnitt (19) der Be- und/oder Entladebrücke (5) verlängert ist, wobei der mit der Materialverdickung (13) versehene untere Planenbereich, auf dem die Halterollenpaare (15,16) laufen, strammgezogen ist.

2. Kaibandbrücke nach Anspruch 1, dadurch gekennzeichnet, daß im unteren Planenbereich, in Längsrichtung der Kaibandbrücke (2) gesehen, außerhalb der Halterollenpaare (16) in vorgegebenen Abständen Sturmhaken (21) angeordnet sind.

3. Kaibandbrücke nach den Ansprüchen 1 und 2, dadurch gekennzeichnet, daß die Plane (12) zumindest an einem ihrer Enden an der Kaibandbrücke (2) durch Federn (20) gehalten ist.

## Claims

1. Dock conveyor bridge, into which there projects a loading and/or unloading bridge (5) cooperating with the ship loading and/or unloading device, the loading and/or unloading bridge being movable in the longitudinal direction of the dock conveyor bridge, and the slot which runs in the longitudinal direction in the dock conveyor bridge (2) and faces towards the loading and/or unloading bridge (5) being closed by a protection device that can be actuated in the opening direction, characterised in that
   - the protection device is formed by a one-piece tarpaulin (12) made of weather-resistant and flame-resistant material, which has a thickening (13) of material in its lower region and is fixedly supported over the entire length of the dock conveyor bridge (2) above and below the slot (6),
   - the tarpaulin (12) is guided by means of a plurality of pairs of retaining rollers (15,16) which are fastened in pairs in the region of the slot (6) above and below the loading and/or unloading bridge (5), and
   - the tarpaulin (12) is extended in the region of its lower end round the opening cross-section (19) produced in the loading and/or unloading bridge (5), the lower region of the tarpaulin, which is provided with the material thickening (13) and on which the pairs of retaining rollers (15,16) run, being pulled taut.

2. Dock conveyor bridge according to Claim 1, characterised in that storm hooks (21) are arranged at prescribed intervals in the lower region of the tarpaulin, outside the pairs of retaining rollers (16), seen in the longitudinal direction of the dock conveyor bridge (2).

3. Dock conveyor bridge according to Claims 1 and 2, characterised in that the tarpaulin (12) is held on the dock conveyor bridge (2) by means of springs (20) at least at one of its ends.

## Revendications

1. Portique de quai à bande, dans lequel pénètre un pont de chargement et/ou de déchargement (5) qui coopère avec le chargeur et/ou déchargeur du navire, le pont de chargement et/ou de déchargement étant déplaçable dans le sens longitudinal du portique, et la fente du portique de quai à bande (2), qui est tournée vers le pont de chargement et/ou de déchargement (5) et qui s'étend dans le sens longitudinal, étant fermée par un dispositif de protection qui peut être actionné pour l'ouverture, caractérisé en ce que
   - le dispositif de protection est constitué d'une bâche (12) en une pièce, en matériau résistant aux intempéries et peu inflammable, qui présente dans sa région inférieure un épaississement (13) et qui est montée fixement sur toute la longueur du portique de quai à bande (2), au-dessus et en dessous de la fente (6),

- la bâche (12) est guidée par plusieurs paires de galets de maintien (15,16), qui sont fixés par paires respectives dans la région de la fente (6), au-dessus et en dessous du pont de chargement et/ou de déchargement (5), et

- la bâche (12) est prolongée, dans la région de son extrémité inférieure, de la section d'ouverture obtenue (19) du pont de chargement et/ou de déchargement (5), la région inférieure de la bâche, qui est munie de l'épaississement de matériau (13) et sur laquelle roulent les paires de galets de maintien (15,16), étant raidie par traction.

2.  Portique de quai à bande selon la revendication 1, caractérisé en ce que des crochets de tempête (21) sont disposés à intervalles prédéterminés dans la région inférieure de la bâche, à l'extérieur des paires de galets de maintien (16) vu dans le sens longitudinal du portique de quai à bande (2).

3.  Portique de quai à bande selon la revendication 1 ou 2, caractérisé en ce que la bâche (12) est maintenue sur le portique de quai à bande (2), au moins à une de ses extrémités, par des ressorts (20).

Fig. 1

Fig. 2

Fig. 3

Fig. 4